(19) Europäisches Patentamt
European Patent Office
Office européen des brevets

(11) **EP 4 686 024 A1**

(12) **EUROPEAN PATENT APPLICATION**

(43) Date of publication:
**28.01.2026 Bulletin 2026/05**

(21) Application number: **25189448.1**

(22) Date of filing: **14.07.2025**

(51) International Patent Classification (IPC):
*H02H 3/093* (2006.01)     *H02H 6/00* (2006.01)
*H02J 3/14* (2026.01)     *H02H 7/26* (2006.01)
*H02H 3/033* (2006.01)     *H02H 5/04* (2006.01)
*H02H 3/00* (2006.01)

(52) Cooperative Patent Classification (CPC):
**H02J 3/14; H02H 3/033; H02H 3/0935;**
**H02H 6/005; H02H 7/26;** H02H 3/006; H02H 5/04;
H02J 2310/12; H02J 2310/14; H02J 2310/60;
H02J 2310/62

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **25.07.2024 US 202418784628**
**10.01.2025 US 202519017376**

(71) Applicant: **Schneider Electric USA, Inc.**
**Andover, MA 01810 (US)**

(72) Inventor: **Jakupi, Andi**
**Marion, IA (US)**

(74) Representative: **Manitz Finsterwald**
**Patent- und Rechtsanwaltspartnerschaft mbB**
**Martin-Greif-Straße 1**
**80336 München (DE)**

(54) **MAINTAINING CURRENT UTILITY SERVICE WITH LOAD EXPANSION AND DYNAMIC LOAD ADJUSTMENT BASED ON PANEL TEMPERATURE**

(57)     Systems/methods for managing a load center (500) uses a thermal model of an overcurrent protection device (504) to adjust the load center energy level. The systems/methods provide an energy management system (512) that manages the amount of load energy in the load center (514), adjusting as needed for panel (502) temperature (516) in the load center (500), to allow the load center (500) to operate in an overloaded state without inducing thermal tripping. The system determines a thermal shedding time that provides a margin or threshold against the thermal tripping, then determines, for a given load center (500) temperature (516) and energy level (514), whether the load center (500) has been operating in an overloaded state for a time that equals or exceeds the thermal shedding time. The system thereafter determines any load shedding that may be needed to reduce the load energy level. This arrangement allows the load center (500) to remain in an overloaded state without thermal tripping.

**FIG. 5**

EP 4 686 024 A1

**Description**

CROSS-REFERENCE TO RELATED APPLICATIONS

This application for patent is a continuation-in-part of U.S. Non-Provisional Application No. 18/784,628, entitled "Controlling Load Centers Based on Thermal Characteristics," filed July 25, 2024, which is incorporated herein by reference in its entirety.

TECHNICAL FIELD

The present disclosure relates to electrical distribution panels and other load centers, and particularly to systems and methods for maintaining current utility service while supporting an expanded load and also making dynamic load adjustments based on panel temperature.

BACKGROUND

A load center in a home or building refers to the main point of distribution for utility power throughout the home or building. In most homes and buildings, the load center is an electrical distribution panel housed within a metal enclosure mounted on a wall in a utility closet, garage, and the like. The load center typically has a series of slots in which circuit protection devices, such as circuit breakers, relays, surge protectors, and the like, may be installed. Each of these devices provides power to and fault protection for a separate branch circuit in the home or building (e.g., kitchen, master bedroom, game room, etc.). This prevents a fault occurring in one branch circuit from affecting the power supplied to other branch circuits.

Most load centers are sized, or rated, when installed to ensure sufficient current carrying capacity to simultaneously power all typical loads on the branch circuits. For a residential dwelling, for example, the contemplated loads may include HVAC equipment, washer and dryer, electric range, water heater, refrigerator, and various appliances. As subsequent loads are added to the load center, especially large loads, such as an electric vehicle (EV) charger, pool pump, and the like, or existing loads are replaced (e.g., a larger HVAC unit), the demand for utility power may increase beyond the load center rating and cause the load center to operate in an "overloaded" state. When that happens, an overcurrent protection device (OCPD) in the load center interrupts or "trips" utility power to the branch circuits. The trips typically occur automatically, either instantly or after a fixed amount of time that is preset within the OCPD, depending on the level of overcurrent.

One way to prevent unwanted trips, or nuisance trips, is to upgrade the load center, for example, by installing a new, higher-rated load center, or by increasing the size (i.e., handle rating) of the OCPD in the existing load center. However, installing a new load center or replacing the OCPD in an existing load center can be a costly endeavor, typically requiring a certified electrician or other specially trained personnel to perform the installation or expansion. As well, such installation or expansion typically requires structural changes to walls and ceilings, especially for older residential dwellings, in order to accommodate new cabling and the like for the higher rating, which can further increase cost and complications. Service feeder upgrade may also be required to support higher rated load centers, which may require the utility to lay a new cable/wires from the transformer to the home/dwelling.

Accordingly, a need exists for a way to manage load centers to avoid unwanted trips without having to install a new load center or expand an existing load center.

SUMMARY

Embodiments of the present disclosure relate to systems and methods for managing a load center to prevent unwanted trips without having to install a new load center, expand an existing load center, or update the utility service line. The systems and methods provide a way to manage the amount of load energy in the load center to allow the load center to operate in an overloaded state without inducing thermal tripping of the load center. These systems and methods may take the form of an energy management system that monitors temperature change within the load center and also the load center energy level, and determines whether the load center is close to thermal tripping based on the temperature rise and the energy level. To facilitate the monitoring, thermal shedding time curves may be obtained or derived and used to provide a margin or threshold against the thermal tripping. The energy management system then determines, for a given load center temperature and energy level, whether the load center has been overloaded for a time equal to or greater than the thermal shedding time, taking into account any temperature change within the load center. The energy management system thereafter determines any load shedding that may be needed to reduce the load energy level. This monitoring and adjusting of load center energy level based on thermal shedding time allows the load center to remain in an overloaded state without tripping.

Allowing the load center to operate in an overloaded state without thermal tripping provides several advantages and benefits. For example, homeowners and occupants can continue using their existing load centers rather than upgrading or replacing the load centers, thereby avoiding significant costs, disruption of routines, and stress. Further, electrical utilities can skip service upgrades and updating of electrical infrastructure that may be needed, for example, if multiple homeowners in a given area were to upgrade or replace their main load centers. The embodiments herein also help keep load center bus bars and service feeder conductors from being overloaded to an extent that damage occurs or where the main breaker is prevented from tripping. These embodiments also minimize interruptions of any expanded loads on the load center in the event load shedding is needed, allowing such loads to continue running normally for longer intervals while the load center is in an overloaded state.

In general, in one aspect, embodiments of the present disclosure relate to an energy management system for a load center. The energy management system comprises, among other things, a processor, and a storage unit coupled to the processor. The storage unit stores computer-readable instructions thereon that, when executed by the processor, cause the processor to obtain a load center energy level from an overcurrent protection device in the load center, the load center energy level indicative of an amount of current flowing through the overcurrent protection device. The computer-readable instructions also cause the processor to obtain a panel temperature within the load center corresponding to the load center energy level, and determine whether the load center is operating in an overloaded state based on the panel temperature within the load center and the load center energy level. The computer-readable instructions also cause the processor to adjust the load center energy level of the load center according to a temperature model of the load center and a thermal model of the overcurrent protection device to allow the load center to operate in the overloaded state without tripping the overcurrent protection device.

In general, in another aspect, embodiments of the present disclosure relate to a method of managing a load center. The method comprises, among other things, obtaining a load center energy level from an overcurrent protection device in the load center, the load center energy level indicative of an amount of current flowing through the overcurrent protection device. The method also comprises obtaining a panel temperature within the load center corresponding to the load center energy level, and determining whether the load center is operating in an overloaded state based on the panel temperature within the load center and the load center energy level. The method further comprises adjusting the load center energy level of the load center according to a temperature model of the load center and a thermal model of the overcurrent protection device to allow the load center to operate in the overloaded state without tripping the overcurrent protection device.

In general, in yet another aspect, embodiments of the present disclosure relate to a load center. The load center comprises, among other things, a housing, an overcurrent protection device installed within the housing, and an energy management system installed within the housing and communicatively coupled to the overcurrent protection device. The energy management system is configured to obtain a load center energy level from the overcurrent protection device, the load center energy level indicative of an amount of current flowing through an overcurrent protection device. The energy management system is also configured to obtain a panel temperature within the housing corresponding to the load center energy level, and determine whether the load center is operating in an overloaded state based on the panel temperature within the housing and the load center energy level. The energy management system is further configured to adjust the load center energy level of the load center according to a temperature model of the load center and a thermal model of the overcurrent protection device to allow the load center to operate in the overloaded state without tripping the overcurrent protection device.

In accordance with any one or more of the foregoing embodiments, the load center energy level of the load center is adjusted by: computing a thermal shedding time for the load center as a function of the load center energy level, a re-rating factor, and a current rating of the overcurrent protection device, wherein the re-rating factor is derived using the panel temperature; determining whether the load center is operating in the overloaded state for an amount of time equal to or greater than the thermal shedding time; and issuing, responsive to the load center operating in the overloaded state for an amount of time equal to or greater than the thermal shedding time, a control signal configured to cause a specified load to be shed from the load center.

In accordance with any one or more of the foregoing embodiments, the thermal shedding time for the load center is computed in response to a determination that the load center energy level exceeds a thermal shedding threshold multiplied by the re-rating factor and the current rating of the overcurrent protection device.

In accordance with any one or more of the foregoing embodiments, the load center energy level is adjusted by immediately issuing a control signal configured to cause a specified load to be shed from the load center, and the control signal is configured to cause a specified load to be shed from the load center in response to the load center energy level exceeding a fast shedding threshold multiplied by a re-rating factor and a current rating of the overcurrent protection device.

In accordance with any one or more of the foregoing embodiments, the load center energy level is adjusted by: computing a thermal recovery time for the load center as a function of the load center energy level, a re-rating factor, a current rating of the overcurrent protection device, and a time function based on the panel temperature within the load center; determining whether a load has been shed from the load center for a time equal to the thermal recovery time; and issuing, responsive to the load having been shed from the load center for an amount of time equal to the thermal recovery time, a control signal configured to cause the load to be connected to the load center.

In accordance with any one or more of the foregoing embodiments, the thermal recovery time is computed in response to the load being identified as having been shed from the load center.

In accordance with any one or more of the foregoing embodiments, the temperature model of the load center is implemented as one or more lookup tables, and model values for the temperature model are retrieved from the one or more lookup tables.

BRIEF DESCRIPTION OF THE DRAWINGS

FIG. 1 illustrates an example trip curve for a circuit breaker in accordance with embodiments of the present disclosure;

FIG. 2 illustrates an example current-ambient temperature chart for a circuit breaker in accordance with embodiments of the present disclosure;

FIG. 3 illustrates an example temperature-trip time graph for a circuit breaker in accordance with embodiments of the present disclosure;

FIG. 4 illustrates another example trip curve for a circuit breaker in accordance with embodiments of the present disclosure;

FIG. 5 illustrates an example load center in accordance with embodiments of the present disclosure;

FIG. 6 illustrates an example energy management system in accordance with embodiments of the present disclosure;

FIG. 7 illustrates an example operational flowchart for the energy management system in accordance with embodiments of the present disclosure;

FIG. 8 illustrates an example thermal shedding flowchart for the energy management system in accordance with embodiments of the present disclosure;

FIG. 9 illustrates an example quick shedding flowchart for the energy management system in accordance with embodiments of the present disclosure;

FIG. 10 illustrates an example recovery and normal operation flowchart for the energy management system in accordance with embodiments of the present disclosure;

FIG. 11 illustrates an example computing system that may be used for the energy management system in accordance with embodiments of the present disclosure; and

FIG. 12 illustrates an example storage system that may be used for the energy management system in accordance with embodiments of the present disclosure.

DETAILED DESCRIPTION

This description and the accompanying drawings illustrate example embodiments of the present disclosure and should not be taken as limiting, with the claims defining the scope of the present disclosure, including equivalents. Various mechanical, compositional, structural, electrical, and operational changes may be made without departing from the scope of this description and the claims, including equivalents. In some instances, well-known structures and techniques have not been shown or described in detail so as not to obscure the disclosure. Further, elements and their associated aspects that are described in detail with reference to one embodiment may, whenever practical, be included in other embodiments in which they are not specifically shown or described. For example, if an element is described in detail with reference to one embodiment and is not described with reference to a second embodiment, the element may nevertheless be claimed as included in the second embodiment.

As alluded to above, adding loads to an existing load center, especially large loads, or replacing a load with a larger load, may increase the demand for utility power beyond the load center rating and cause the load center to operate in an overloaded state. When the demand for power increases thusly, homeowners and occupants need to upgrade their load centers by upgrading the main breakers in the load centers (i.e., the OCPDs), the bus bars, and/or the service feeder conductors. Embodiments of the present disclosure allow the homeowners to avoid these large and costly upgrades by keeping the service entrance and electrical panel at the same rating, and instead operate the electrical panel in an overloaded state. These embodiments leverage several insights discerned by the present inventor regarding main breaker operation as well as certain types of loads, as discussed herein.

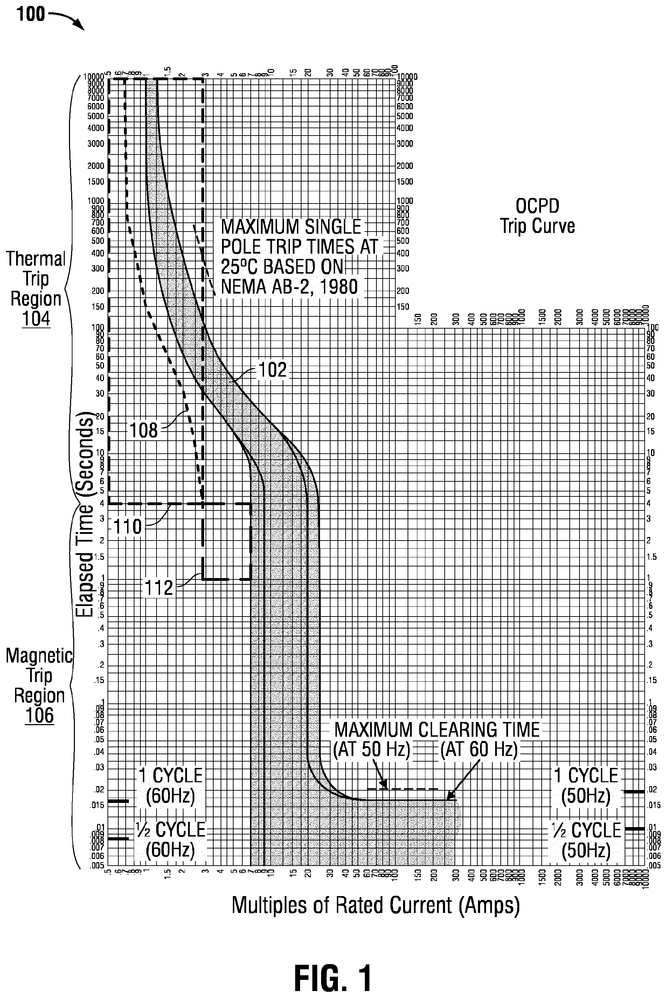

Referring now to FIG. 1, a typical trip curve 100 is shown, also called a time-current curve, for a model of a thermomagnetic circuit breaker often used as a main breaker in residential dwelling load centers (e.g., a molded case circuit breaker (MCCB)). The trip curve 100 is basically a thermal model of the thermomagnetic circuit breaker, with elapsed time indicated along the vertical axis, and multiples of rated current along the horizontal axis. The shaded area represents a trip area 102 that indicates the amount of current and the time, on a logarithmic scale, at which the circuit breaker is expected to trip at that current. The leftmost boundary of the trip area 102 represents a minimum time until the circuit breaker trips at a given current and the rightmost boundary represents a maximum time until the circuit breaker trips at that current.

As is well known, thermomagnetic circuit breakers like the one discussed above have a thermal trip mechanism in the form of a bimetallic strip, and also a magnetic trip mechanism in the form of a magnetic coil or solenoid. Current flowing through the bimetallic strip heats the bimetallic material and causes it to bend, which is useful for protecting against smaller overcurrents, typically less than 7X the rated current, as indicated by a thermal trip region 104. The magnetic coil or solenoid, on the other hand, reacts much faster, almost instantaneously, making it useful for protecting against larger overcurrents, typically from 7X the rated current up to tens or even thousands of Amps, as indicated by a magnetic trip region 106.

From the above trip curve 100, the present inventor realized that the load center can be operated beyond its rated current (i.e., in an overloaded state) for a period of time without tripping the circuit breaker so long as the load center current level and duration do not push the circuit breaker into the trip area 102 of the thermal trip region 104. The load center current level and duration can be monitored and, if these values start getting close to the trip area 102, then load shedding may commence to reduce the current level and increase the remaining time until tripping. In addition, an elevated ambient temperature within the load center can significantly increase the heating of the bimetallic material in the circuit breaker, potentially causing the bimetallic strip to bend after only a brief and/or small amount of current. Thus, the ambient temperature within the load center can also be monitored and its effect on the bimetallic material in the circuit breaker can be factored into the amount and duration of current that can flow without tripping the circuit breaker.

To facilitate the above monitoring and trip avoidance, a thermal shedding time, indicated by curve 108, may be calculated or derived within the thermal trip region 104 to provide a margin or threshold against the trip area 102. Tripping can be avoided with a high degree of confidence so long as the load center current level and duration do not extend beyond the thermal shedding time curve 108. This can be accomplished by shedding certain loads from the load center as needed to maintain the load center current at a level below the thermal shedding time curve 108.

As a visualization aid, a thermal shedding region can be defined, indicated by box 110 in FIG. 1, that is coterminous with the thermal trip region 104 up to about 3X the rated current. As long as the load center current level and duration, after factoring in the load center ambient temperature, are within this thermal shedding region 110, then sufficient time remains for decisions to be made, based on the thermal shedding time curve 108, regarding whether to commence load shedding and which loads to shed to avoid a thermal trip. Similarly, a quick shedding region can be defined, indicated by box 112 in FIG. 1, that extends from the start of the magnetic trip region 104 at about 3X the rated current down to about one second of elapsed time. If the load center current level and duration are within this quick shedding region 112, then load shedding should begin immediately, within about 1 to about 5 seconds in some embodiments, depending on the specific implementation, to avoid a magnetic trip to avoid a magnetic trip.

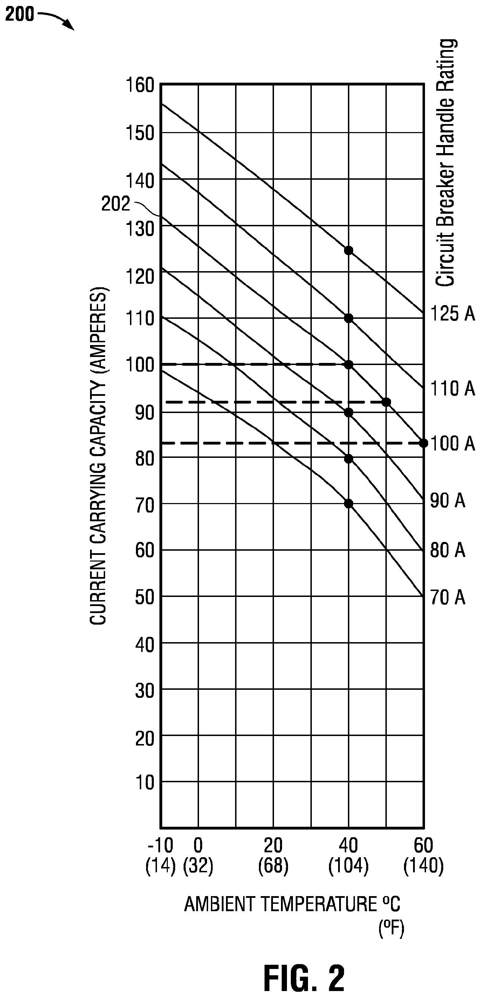

FIG. 2 graphically illustrates the potential effects of elevated ambient temperature in more detail via an example current-ambient temperature chart 200. In the chart 200, circuit breaker current carrying capacity is listed along a left vertical axis, handle rating along a right vertical axis, and outdoor ambient temperature along a horizontal axis. A series of curves are displayed on the chart 200, each curve depicting how circuit breaker current carrying capacity changes with ambient temperature for thermomagnetic circuit breakers of the type often used as main breakers in residential dwelling load centers. For example, curve 202 represents a circuit breaker having a 100 Amp handle rating at a typical or normal ambient temperature, which is 40° C according to industry standards (e.g., IEC 60898). The current carrying capacity for this circuit breaker drops down to about 92 Amps when the ambient temperature increases to 50° C, and down to about 84 Amps when the ambient temperature increases to 60° C, as indicated by the horizontal dashed lines. Other current carrying capacity curves in the chart 200 exhibit similar behavior.

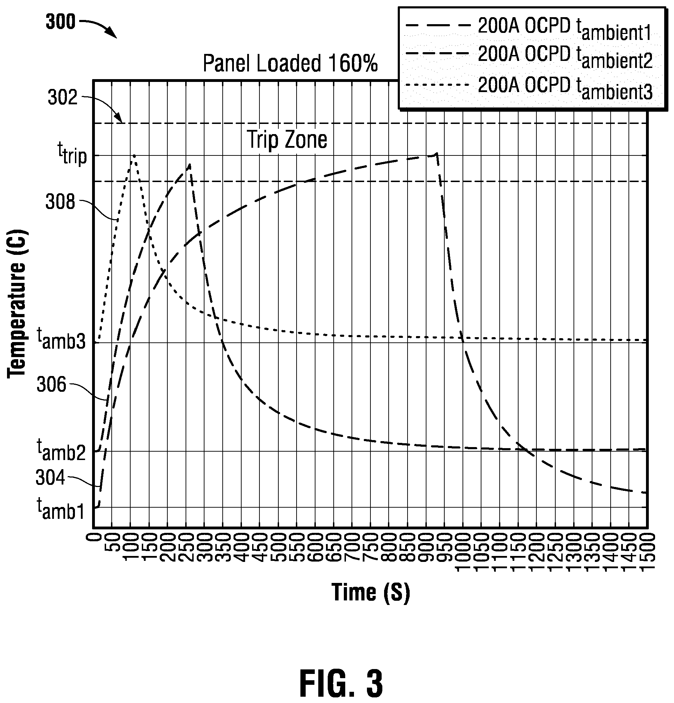

FIG. 3 shows an example temperature-trip time graph 300 that further illustrates the effects of elevated ambient temperature on thermomagnetic circuit breakers. In the graph 300, the vertical axis represents temperature while the horizontal axis represents elapsed time. The ambient temperature in this example is the temperature in the load center where a typical thermomagnetic main breaker is installed. This temperature tracks or otherwise corresponds to the temperature of the bimetallic material in the trip mechanism within the main breaker itself. A trip zone 302 represents the ambient temperature range where the main breaker trips. Graphs 304, 306, and 308 represent low ("ambient 1"), medium ("ambient 2"), and high ("ambient 3") ambient temperature, respectively. The load center here is assumed to be operating in an overloaded state, with current flowing through the load center at about 160 percent of the main breaker rating. As the graphs 304, 306, and 308 show, the load center can operate in this overloaded state for nearly 950 seconds in low ambient temperature compared to only about 250 seconds and only about 100 seconds in medium and high ambient temperature, respectively.

Based on the foregoing, care should be taken to ensure an adequately sized circuit breaker is used as the main breaker, taking into account the ambient temperature in the load center where the main breaker is installed (e.g., indoor versus outdoor installation, total number of circuit breakers in the load center, etc.). To this end, it is well known in the art to derate a circuit breaker current rating based on the ambient temperature in the load center. Re-rating the circuit breaker can be done by applying a re-rating factor, R, to the handle rating of the circuit breaker used as the main breaker in the load center. The re-rating factor for a given ambient temperature and circuit breaker rating may be derived from current-ambient temperature charts similar to the chart 200 of FIG. 2 using, for example, curve fitting techniques known to those skilled in the art (e.g., linear regression, smoothing, exponential functions, etc.). Alternatively, the data from the current-ambient temperature charts may be stored in one or more lookup tables for subsequent access as needed.

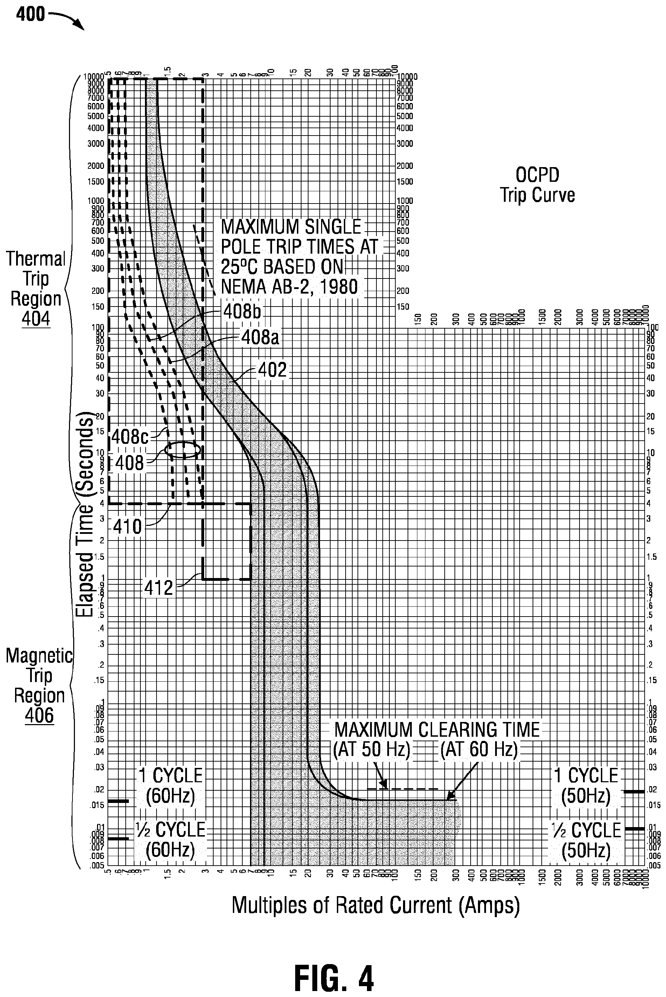

FIG. 4 illustrates an example of how a re-rating factor may be applied to account for elevated ambient temperature in a trip curve 400 similar to the trip curve 100 from FIG. 1. Like its counterpart from FIG. 1, the trip curve 400 shows a trip area 402 that indicates the amount of current and the time, on a logarithmic scale, at which the circuit breaker is expected to trip at that current. As before, the load center current level and duration can be monitored and, if these values start getting close to the trip area 402, then load shedding may commence to reduce the current level and increase the remaining time until tripping.

To facilitate monitoring of the load center current level and duration, several thermal shedding time curves may be derived or otherwise defined, as indicated at 408, to account for any temperature increases within the load center that may effect trip time. In the present example, curve 408a represents thermal shedding time for a typical or normal ambient temperature within the load center, which is 40° C for the purposes herein. Curve 408b represents thermal shedding time when the ambient temperature within the load center has increased to 50° C, and curve 408c represents thermal shedding time when the ambient temperature within the load center has increased to 60° C. These latter thermal shedding time curves 408b and 408c reflect a re-rating of the load center current by an appropriate re-rating factor to account for the effects of the higher ambient temperatures on the trip mechanism of the circuit breaker. Tripping may then be prevented with a high degree of confidence so long as the load center current level and duration do not extend beyond an applicable one of thermal shedding time curves 408.

As a visualization aid, a thermal shedding region may again be defined, indicated by box 410 in FIG. 4, that is coterminous with the thermal trip region 404 up to about 3X the rated current. As long as the load center current level and duration are within this thermal shedding region 410, then sufficient time remains for decisions to be made, based on the thermal shedding time 408, regarding whether to commence load shedding and which loads to shed to avoid a thermal trip. Similarly, a quick shedding region may also be defined, indicated by box 412 in FIG. 4, that extends from the start of the magnetic trip region 404 at about 3X the rated current down to about one second of elapsed time. If the load center current level and duration are within this quick shedding region 412, then load shedding should begin immediately to avoid a magnetic trip.

The above scheme leverages the fact that most loads operate in cycles, meaning they turn On for a certain time interval, then enter an Off or a low-power state for a certain time interval, then turn back On again, and so forth. If a load turns On for only a few seconds before it enters an Off or in a low-power state, then it is feasible to allow that load to overload the load center for those few seconds, after which the load center will return to being underloaded again. In some embodiments, an estimate of the amount of overload (e.g., an overload percentage) can be determined and, based on the thermal model of the circuit breaker (i.e., trip curve 400), an estimate of the time until the circuit breaker trips can also be determined. This time estimate can then be used to determine how long a given load can be maintained in an On state and whether it can be allowed to finish its On cycle without interruption. Such an arrangement allows embodiments of the present disclosure to delay interruption of a given load long enough so that the load may not need to be interrupted at all, or at least minimize the interruption time, which can increase user or homeowner satisfaction with operation of the system or equipment.

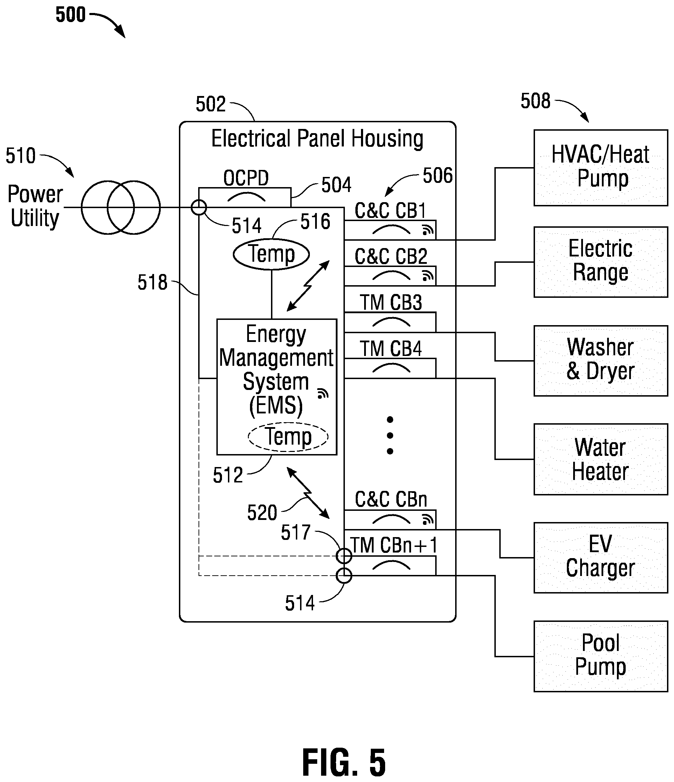

Referring next to FIG. 5, an example load center 500 is shown that can operate in an overloaded state while minimizing or eliminating thermal tripping in accordance with embodiments of the present disclosure. The load center 500 in this example resembles a typical electrical panel for a residential dwelling insofar as there is panel housing 502 and several electrical switching and protection devices installed within the housing 502. Thus, there is a main breaker 504 that serves as an overcurrent protection device (OCPD) for the entire load center 500, and a series of branch breakers 506 that provide protection for various electrical loads 508 at the residential dwelling. Power for these electrical loads 508 comes from a utility power source 510, such as an electrical power plant. It should be noted that although a residential load center 500 is shown in this example, those having skill in the art will appreciate that the principles herein are also applicable to commercial and other types of nonresidential load centers.

In the example of FIG. 5, the main breaker 504 may be a typical thermomagnetic circuit breaker, while the branch breakers 506 may include a combination of controlled branch devices and relays, such as communication and control circuit breakers, labeled "C&C CBn," as well as non-controlled branch devices and relays, such as thermomagnetic circuit breakers, labeled "TM CBn," where "n" represents the circuit breaker number. Other types of devices may also be used as the OCPD and/or the branch breakers, such as surge protectors and other electrical switching and protection devices. The use of C&C breakers is particularly advantageous, however, as these so-called "smart" circuit breakers feature a number of advances over traditional circuit breakers. For example, C&C circuit breakers can measure and log the amount of current flowing to their respective loads, and can transmit this information in real time to a remote monitoring and control application over a wired or wireless communication network (e.g., Modbus, DNP3, BACnet, Wi-Fi, Bluetooth, ZigBee, etc.). In a similar manner, C&C circuit breakers can also be remotely controlled by a monitoring and control application to disconnect or shed their loads, and subsequently reconnect their loads, as needed.

The loads 508 connected to the load center 500 of FIG. 5 may include common or traditional loads, such as an HVAC unit or a heat pump, electric range, washer and dryer, and water heater. In the example, however, additional loads were subsequently added to the load center 500, including an EV charger and a pool pump, that were not accounted for at the time the load center 500 was installed. As a result, these additional loads may cause the amount of current flowing through the load center 500 to exceed its current rating when all the loads 508 are running at the same time. When this happens, depending on the overcurrent level and duration, the overload may cause the main breaker 504 to trip and interrupt current flow to every load 508.

In accordance with embodiments of the present disclosure, the load center 500 is equipped with an energy management system (EMS) 512 that can mitigate the above overload situation. The energy management system 512 is configured to monitor the load center energy level, which is the energy level that passes through the main breaker 504, and also the energy level passing through certain branch breakers 506 to their respective loads 508. To this end, an energy sensing device 514, which may be a current meter or a simple current transformer in some embodiments, is installed at the main breaker 504 to measure the amount of energy passing through the main breaker 504. Similarly, a temperature sensing device 516, which may be a temperature sensor or a simple thermistor in some embodiments, is installed within the panel housing 502 near the main breaker 504 to measure panel temperature, which is the ambient temperature within the panel near the main breaker 504. In some embodiments, the temperature sensing device 516 may be provided as an embedded device in the energy management system 512 (see dashed oval) instead of a separate sensing device. The energy information and the panel temperature information may then be transmitted to the energy management system 512 in real time over an appropriate connection 516 to monitor the load center ambient temperature and energy level. Similar energy information may be transmitted in real time from the branch breakers 506, either over a wireless connection 518 from the C&C breakers (i.e., CB1, CB2, CBn, etc.) that come equipped with such capability, or via an optional energy sensing device 514 and/or other optional energy sensing devices 517 that may be installed at selected thermomagnetic breakers. Based on the ambient temperature and energy information, the energy management system 512 can determine an amount of time that the load center 500 may be operated in an overloaded state without reaching a point that causes thermal tripping of the main breaker 504.

Thus, by keeping track of the load center ambient temperature and energy level, and hence the thermal increase and decreases in the load center 500, the energy management system 512 can determine when to disconnect certain individual loads 508 in order to bring the load center energy to a level where the main breaker 504 does not trip. As alluded to above, the ability to avoid interruptions of the various loads 508 provides significant benefits. Frequent interruptions can cause damage to certain loads 508 and their normal operation, which can reduce their lifetime and/or incur additional maintenance cost to the homeowner or user. Keeping these interruptions, or nuisance trips, to a minimum helps improve user satisfaction and also keeps these loads 508 running normally, as well as preventing the load center 500 from shutting down power for the entire residential dwelling in the event the homeowner needs to use power temporarily above the rated amount.

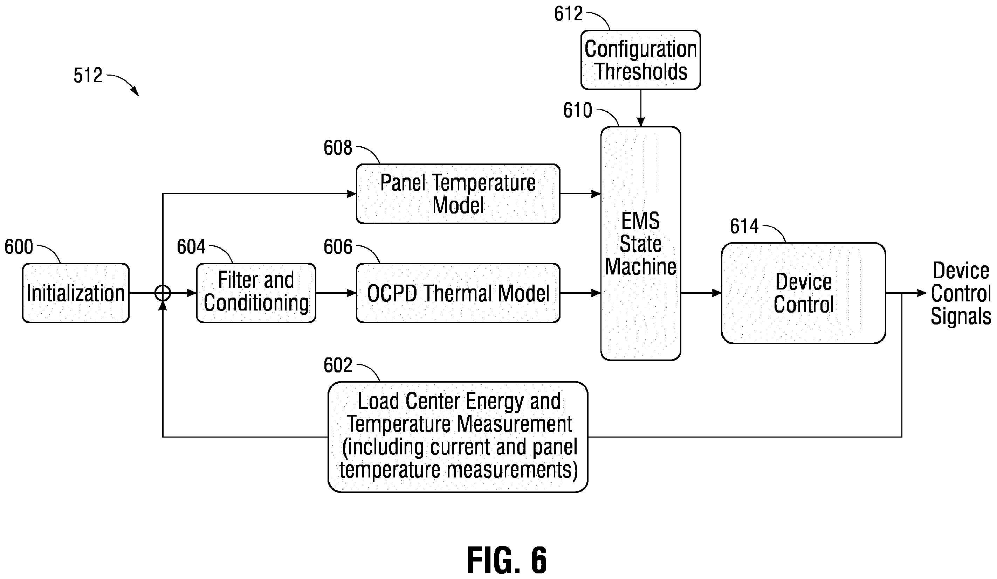

FIG. 6 is a functional block diagram illustrating an example implementation of the energy management system 512 in accordance with embodiments of the present disclosure. As can be seen, the system 512 includes an initialization block 600 that is configured to set up or prepare the system to begin operation, such as initializing variables, allocating appropriate memory and processing resources, setting up configuration parameters, and similar tasks. The system 512 also includes a load center energy and temperature measurement block 602 configured to receive or acquire temperature and energy level measurements from the main breaker 504 and one or more, or all, of the branch breakers 506, as discussed above. The measurements may be in the form of analog signals in some embodiments, or they may be in the form of digital data in some embodiments, depending on the particular application. A filter and conditioning block 604 operates to enhance, clean, and otherwise remove any noise or unwanted components from the energy level measurements, such as by applying an exponential moving average to the measurements.

The energy management system 512 also includes a thermal model block 606 that operates to apply a thermal model of the OCPD to the filtered and conditioned load center energy measurements. The OCPD in the present example is the main breaker 504 and, in some embodiments, the load center energy level being monitored may be the amount of current passing through the main breaker 504. In these embodiments, the thermal model may resemble a trip curve for a thermomagnetic circuit breaker similar to the trip curve 400 from FIG. 4, or a data representation of such a trip curve (e.g., a data table). In other embodiments, the load center energy level that is monitored may be voltage, or wattage, or resistance, or other properties that can provide an indication of the thermal state of the main breaker 504, or the bimetallic strip therein. In either case, the thermal model block 606 uses the load center energy measurements and the thermal model of the OCPD to generate several energy parameters that provide an indication of the current thermal state of the main breaker 504, as discussed further below.

The energy management system 512 further includes a panel temperature model block 608 that operates to apply a temperature model to the ambient temperature measured within the panel housing 502. The ambient temperature measurements are preferably obtained near the main breaker 504, although this is not required. In some embodiments, the temperature model may resemble a current-ambient temperature chart for a circuit breaker similar to the chart 200 in FIG. 2, or a data representation of such a chart (e.g., a data table). In other embodiments, a proxy for the ambient temperature within the panel housing 502 may be derived and used as the ambient temperature, for example, by comparing the total load center energy level entering the main breaker 504 versus the total energy level leaving the various branch breakers 506. In either case, the panel temperature model block 608 uses the load center ambient temperature measurements and the temperature model to determine a re-rating factor for the main breaker 504, as discussed further below.

A state machine 610 may be included in the energy management system 512 in some embodiments to process the re-rating factor determined or provided by the panel temperature model block 608 and the energy parameters generated or provided by the thermal model block 606. A state machine, as those skilled in the art understand, includes any computational device that can transition from one state to another in response to one or more inputs. Such a state machine 610 may be implemented in hardware, software, or some combination thereof (i.e., firmware), including as a lookup table, in some embodiments. The state machine 610 operates to compare the parameters provided by the thermal model block 606, after re-rating to account for the ambient temperature in the panel, against one or more load center constraints and configuration thresholds stored in a configuration threshold database 612. Based on this comparison, the state machine 610 determines whether the load center is in an overloaded state, whether sufficient time remains for making decisions regarding load shedding to avoid a thermal trip, or whether load shedding should begin immediately to avoid a magnetic trip.

A device control block 614 operates to implement any decisions arrived upon by the state machine 610. The device control block 614 is configured to communicate with and remotely control one or more, or all, of the branch breakers 506 to shed their respective loads 508, if needed. In some embodiments, the shedding of the loads 508 is performed in an ordered sequence that is established based on a predefined priority list, which load priority list may be stored in the configuration threshold database 612 in some embodiments. Thus, for example, if the state machine 610 determines that shedding needs to occur to avoid thermal tripping of the main breaker 504, then the state machine 610 issues or otherwise sends an appropriate command or control signal to the device control block 614. The device control block 614 thereafter instructs or otherwise communicates an appropriate device control signal to the branch breaker for the EV charger to shed its load first, followed by the branch breaker for the electric range if needed, followed by the branch breaker for the HVAC unit if still needed, and so forth. Likewise, the device control block 614 can also communicate with the branch breakers 506 to reconnect their respective loads 508 when thusly indicated by the state machine 610.

In some embodiments, as discussed above, the thermal model used by the thermal model block 606 may resemble a trip curve for a thermomagnetic circuit breaker similar to the trip curve 400 in FIG 4. As also mentioned above, the energy level being monitored and modeled by the thermal model in the present example is specifically current level. Such a thermal model involves using the specific heat transfer of the particular bimetallic materials used in the circuit breaker, as generally expressed by Equation (1), Newton's Law of heat loss, as expressed by Equation (2), and the Ohmic heat generation of the bimetallic strip, as expressed by Equation (3):

$$Q(t) = m * C * dT/dt \qquad\qquad (1)$$

where $m$ is the mass of the bimetallic strip, c is the specific heat capacity of the metallic material(s), and $dT/dt$ is the rate of change of temperature $T$ over time.

$$Q_{loss}(t) = h * A * (T - T_{ambient}) \qquad\qquad (2)$$

where h is the convective heat transfer coefficient, A is the surface area of the bimetallic strip, $T$ is the temperature of the bimetallic strip, and $T_{ambient}$ is the ambient temperature difference.

$$Q_{heat}(t) = R_{OCPD} * i_{OCPD}^2 * t \qquad\qquad (3)$$

where $R_{OCPD}$ is the main breaker impedance and $i_{OCPD}$ is the main breaker current.

It should be noted that a bimetallic strip when fashioned in a cantilever cut has a thermal deflection due to the temperature change over time. As the bimetallic strip in a circuit breaker is constructed in cantilever strips and calibrated based on a specific current rating and specific temperature, the deflection can be determined from the temperature change expressed in the equations above.

Other techniques for implementing the thermal model of the thermal model block 606 include the use of one or more lookup tables containing model values derived from empirical data. The use of such lookup tables for the thermal model may be advantageous in some embodiments compared to calculating or computing the above heat equations, Equations (1) to (3), to derive the model values, as different OCPDs have different cantilever dimensions and different bimetallic materials, and the heat equations for these OCPDs are different due to different specific heat coefficients, bimetal mass, and calibration settings, and the like. Likewise, the re-rating factors determined or provided by the panel temperature block 608 may be implemented using one or more lookup tables containing model values derived from empirical data or from existing current-ambient temperature charts. The state machine 610 may then retrieve any model values that it may need to perform its processing for the particular main breaker 504 involved from one or more of the aforementioned lookup tables.

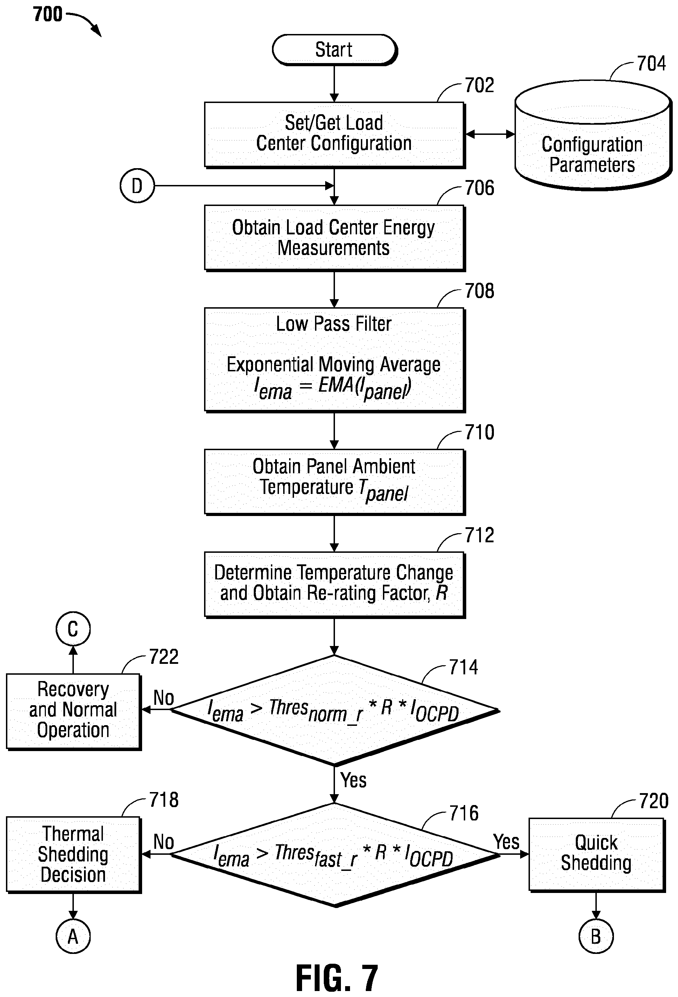

FIG. 7 shows an example flow diagram 700 that may be used by the energy management system 512 and the state machine 610 therein to determine whether and when load shedding is needed. The flow diagram 700 generally begins at block 702 where the system 512 obtains one or more configuration parameters for the particular circuit breaker involved (i.e., main breaker 504), or otherwise establishes one or more configuration parameters based on the obtained configuration parameters. The obtained configuration parameters may be acquired from a configuration parameters database 704, which may reside locally in the system 512, or at a remote location on a network. Such configuration parameters may include, for example, a load center rating (i.e., main breaker handle rating), a thermal model for the load center (i.e., trip curve), a re-rating factor, a temperature model (i.e., current-ambient temperature chart), and any other configuration parameters as needed herein.

At block 706, the energy management system 512 obtains a measurement of the load center energy level, which is the instantaneous load center current ($I_{panel}$) in the present example, via a current sensing device (i.e., current sensing device 514) installed at the main circuit breaker. The system 512 may similarly obtain a measurement of the energy level in one or more of the loads ($I_{L[n]}$) via their respective branch breakers (i.e., branch breakers 506). At block 708, the system 512 applies a low pass filter to the energy level measurements to remove any temporary spikes that may have occurred during startup of one or more loads (i.e., inrush current). At this point, the system 512 also obtains an exponential moving average of the load center energy level in order to remove any transient measurements that may appear ($I_{ema} = EMA$ ($I_{panel}$)).

At block 710, the energy management system 512 obtains a measurement of the ambient temperature within the panel where the circuit breaker is housed via a temperature sensing device (i.e., temperature sensing device 516). This ambient temperature measurement is preferably obtained at about the same time that the energy management system 512 obtains the load center energy level in block 706. At block 712, the energy management system 512 determines whether the panel temperature or ambient temperature in the panel, $t_{panel}$, has increased or decreased relative to the temperature at which the circuit breaker was rated, which is 40°C for most circuit breakers. In some embodiments, it is also possible for the energy management system 512 to instead determine whether the ambient temperature in the panel, $t_{panel}$, has increased or decreased relative to the temperature at which the circuit breaker was commissioned. In either case, the energy management system 512 thereafter obtains a re-rating factor for the circuit breaker based on the change in the panel temperature. In some embodiments, the energy management system 512 may obtain the re-rating factor via a lookup table in the configuration parameters database 704, which may resemble Table 1 below in some embodiments.

**TABLE 1: Re-rating Factor Lookup Table**

|  | Handle Rating(1) | Handle Rating(2) | ... | Handle Rating(n) |
|---|---|---|---|---|
| $t_{panel}(1)$ | R(1, 1) | R(1, 2) | ... | R(1, n) |
| $t_{panel}(2)$ | R(2, 1) | R(2, 2) | ... | R(2, n) |
| ... | ... | ... | ... | ... |
| $t_{panel}(m)$ | R(m, 1) | R(m, 2) | ... | R(m, n) |

At block 714, the energy management system 512 makes a determination whether the exponential moving average of the load center energy level is greater than the load center current rating ($I_{OCPD}$) multiplied by the re-rating factor, R, and a thermal shedding ratio ($Thres_{norm\_r}$). This thermal shedding ratio ($Thres_{norm\_r}$) reflects an amount of overload under which the energy management system 512 needs to begin making decisions about load shedding (i.e., $I_{ema} > Thres_{norm\_r} * R * I_{OCPD}$). The thermal shedding ratio ($Thres_{norm\_r}$) may be selected as needed for a particular application and may be set at unity (i.e., 1/1) in some embodiments, meaning that the amount of overload under which the energy management system 512 needs to begin making decisions about load shedding is 100 percent of the load center rated current. Other examples of the thermal shedding ratio ($Thres_{norm\_r}$) that may be used include 50 percent, 66.7 percent, 75 percent, 80 percent, and the like (i.e., 1/2, 2/3, 3/4, 8/10, etc.). If the determination at block 714 is yes, then the system 512 proceeds to make another determination at block 716 whether the exponential moving average of the load center energy level is greater than the load center current rating ($I_{OCPD}$) multiplied by the re-rating factor, $R$, and a fast shedding a ratio ($Thres_{fast\_r}$). This fast shedding ratio ($Thres_{fast\_r}$) reflects an amount of overload under which the load center needs to shed a load immediately (e.g., within about 1 to 5 seconds in some embodiments, depending on implementation) to avoid a magnetic trip ($I_{ema} > Thres_{fast\_r} * I_{OCPD}$). This fast shedding ratio ($Thres_{fast\_r}$) may also be selected as needed for a particular application and may be set at 3 (i.e., 3/1) in some embodiments, meaning that the amount of overload under which the load center needs to begin load shedding immediately is 300 percent of the load center rated current. In some embodiments, the system 512 may obtain the values for the thermal shedding ratio ($Thres_{norm\_r}$) and the fast shedding a ratio ($Thres_{fast\_r}$) from the configuration parameters database 704.

If the determination at block 716 is no, then the energy management system 512 proceeds to a thermal shedding state at block 718 to begin making decisions regarding thermal shedding. If instead the determination at block 716 is yes, then the system 512 proceeds a quick shedding state at block 720 to immediately begin load shedding. On the other hand, if the determination at block 714 is no, then the system 512 proceeds to a recovery and normal operation state at block 722.

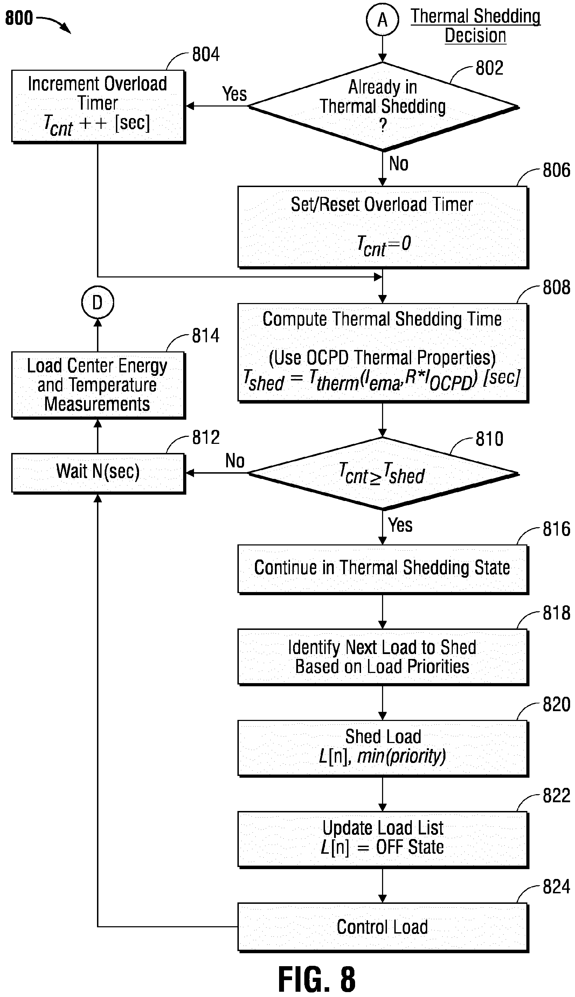

FIG. 8 shows an example flow diagram 800 that may be used by the thermal management system 512 for making thermal shedding decisions in the thermal shedding state. The diagram 800 begins at block 802 where the system 512 determines whether it was already in a thermal shedding state. If the determination is yes, then the system 512 continues to increment an overload timer ($T_{cnt}$) from its current count. If the determination is no, then the system 512 proceeds to set/reset the overload timer at block 806 to a value of $0$ ($T_{cnt} = 0$). At block 808, the system 512 calculates or otherwise computes a thermal shedding time ($T_{shed}$) that serves as a margin or threshold against thermal tripping. This thermal shedding time ($T_{shed}$), which may be in seconds, may be calculated based on or using the thermal properties of the circuit breaker involved ($T_{shed} = T_{therm}(I_{ema}, R * I_{OCPD})$), where $T_{therm}$ is a function of the exponential moving average of the load center energy level ($I_{ema}$), the re-rating factor ($R$), and the load center current rating ($I_{OCPD}$).

In the foregoing, $T_{therm}$ is a temperature rise function that returns the main breaker's trip time based on the panel ambient temperature rise. Several techniques are available to those having skill in the art for determining $T_{therm}$ as a function of the exponential moving average of the load center energy level ($I_{ema}$), the re-rating factor ($R$), and the load center current rating ($I_{OCPD}$). For example, $T_{therm}$ may be determined using a lookup table in some embodiments, with the load center energy level ($I_{ema}$) and the load center current rating ($I_{OCPD}$) used as the inputs to the lookup table. The values in such a lookup table may be derived empirically from experimental or observed data in some embodiments, or the values may be derived mathematically using one or more of Equation (1) to (3) in conjunction with the trip curve for the particular circuit breaker involved. Table 4 below shows an example table that may be used as a lookup table for values of $T_{therm}$.

**TABLE 2: $T_{therm}$ Lookup Table**

|  | $R * I_{OCPD}(1)$ | $R * I_{OCPD}(2)$ | ... | $R * I_{OCPD}(n)$ |
|---|---|---|---|---|
| $I_{ema}(1)$ | $T_{therm}(1, 1)$ | $T_{therm}(1, 2)$ | ... | $T_{therm}(1, n)$ |
| $I_{ema}(2)$ | $T_{therm}(2, 1)$ | $T_{therm}(2, 2)$ | ... | $T_{therm}(2, n)$ |
| ... | ... | ... | ... | ... |
| $I_{ema}(m)$ | $T_{therm}(m, 1)$ | $T_{therm}(m, 2)$ | ... | $T_{therm}(m, n)$ |

At block 810, the energy management system 512 makes a determination whether the overload counter ($T_{cnt}$) meets or exceeds the thermal shedding time ($T_{shed}$). If the determination is no, then the system 512 waits a predefined number of seconds (N(sec)) at block 812, and proceeds to obtain the next load center temperature and energy measurement at block 814, as discussed with respect to the flow diagram 700 in FIG. 7. On the other hand, if the determination at block 810 is yes, then the system 512 continues in the thermal shedding state at block 816, and identifies the next load (L[n]) that needs to be shed at block 818 based on a predefined load priority scheme. The load priority scheme may be stored in the configuration parameters database 704 in some embodiments, and may specify load priority, for example, based on the amount of current required by the load, such that larger loads take higher priority over smaller loads, or vice versa. Alternatively, load priority may be specified based on user selection, such that preferred loads take higher priority over non-preferred loads. It is also possible to combine several load priority schemes, for example, in the event of a tie between two loads. Other load priority ranking strategies may also be used within the scope of the disclosed embodiments. In some embodiments, the system 512 may obtain the priority scheme (or schemes) to be used from the configuration parameters database 704.

At block 820, the energy management system 512 proceeds to shed the load that has been identified in the previous block, for example, by issuing an instruction to cause that load to be shed. In the present example, the load with the lowest priority that remains in an On state is the load that is shed (L[n], *min(priority))*. The system 512 thereafter proceeds to update the load list at block 822 to reflect the shedding of that load (L[n] = OFF State). A control or command signal is then sent from the system 512 to the branch breaker for the identified load that is appropriately configured (i.e.,

formatted) to cause the breaker to shed that load at block 824. The system 512 thereafter proceeds to block 812 and continues as discussed above.

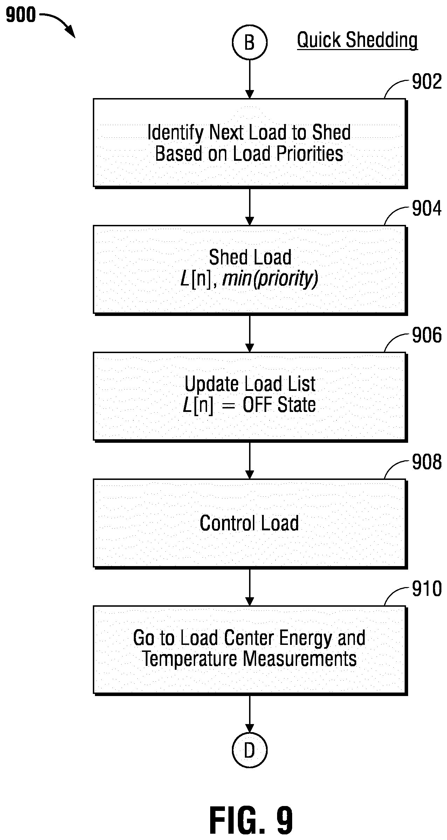

FIG. 9 shows an example flow diagram 900 that may be used by the thermal management system 512 in the quick shedding state. When the system 512 is in the quick shedding state, no decision is made regarding whether to begin load shedding, but instead load shedding begins immediately. The diagram 900 begins at block 902 where the system 512 identifies the next load (L[n]) that needs to be shed based on a predefined load priority scheme. In some embodiments, the load priority scheme may be the same scheme (or schemes) discussed with respect to the flow diagram 800 of FIG. 8, or an alternative load priority scheme may be used, within the scope of the disclosed embodiments. In either case, the system 512 proceeds to shed the load that has been identified at block 904, for example, by issuing an instruction for that load to be shed. The load with the lowest priority that remains in an On state is then shed (*L*[n], *min(priority))*. The system 512 thereafter proceeds to update the load list at block 906 to reflect the shedding of that load (*L*[n] = OFF State). A control or command signal is then sent from the system 512 to the branch breaker for the identified load, appropriately configured (i.e., formatted) to cause the breaker to shed that load at block 908. The system 512 subsequently proceeds to obtain the next measurements of load center energy and temperature at block 910.

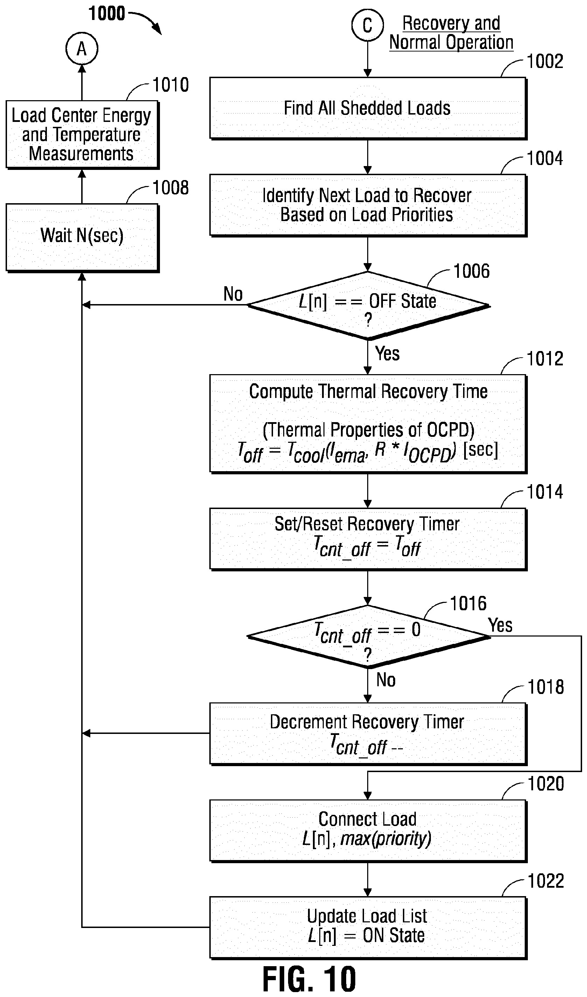

FIG. 10 shows an example flow diagram 1000 that may be used by the thermal management system 512 in the recovery and normal operation state. The diagram 1000 begins at block 1002 where the system 512 finds all loads that were previously shedded in either the thermal shedding state (FIG. 8) or the quick shedding state (FIG. 9). At block 1004, the system 512 identifies the next load (*L*[n]) that needs to be recovered based on a predefined load priority scheme. As before, the load priority scheme may be the same scheme (or schemes) discussed with respect to the flow diagram 800 of FIG. 8, or an alternative load priority scheme may be used.

At block 1006, the energy management system 512 makes a determination whether the load identified in the previous block remains in a shedded state (L[n] = OFF State). If the determination is no, then the system 512 waits a predefined number of seconds (N(sec)) at block 1008, and proceeds to obtain the next measurements of load center temperature and energy at block 1010, as discussed with respect to FIG. 7. If the determination is yes, then the system 512 proceeds to calculate or otherwise compute a thermal recovery time ($T_{off}$) at block 1012 as a function of the thermal properties of the circuit breaker ($T_{off} = T_{cool}(I_{ema}, R * I_{OCPD})$). At block 1014, the system 512 sets/resets a recovery timer ($T_{cnt\_off}$) equal to the thermal recovery time ($T_{off}$).

In the foregoing the thermal recovery time ($T_{off}$) is a temperature decay function that provides a representation of the circuit breaker temperature decline gradient (i.e., a sort of thermal "memory" of the bimetallic strip) and can be used to indicate how long a load needs to remain Off or shedded before it can be powered On again based on the thermal properties of the particular circuit breaker. The temperature gradient shows that temperature rise within a panel tends to concentrate around the main breaker and the bus bar, as the heat is generated in the center of the panel and moves up towards the main breaker. This concentration of temperature has been confirmed from temperature sensors in the panel, and is measurably higher than the ambient temperature outside the panel. As such, a better determination of trip time or cool off time can be derived based on the temperature within the panel versus the temperature outside the panel. Meanwhile, $T_{cool}(I_{ema}, R * I_{OCPD})$ represents a cooling time that is based on the load center energy level exponential moving average ($I_{ema}$), the load center current ($I_{OCPD}$), and a re-rating factor ($R$) for the bimetal temperature decay.

As is the case with $T_{therm}$, several techniques are available to those having skill in the art for determining $T_{off}$ as a function of the exponential moving average of the load center energy level ($I_{ema}$) and the load center current rating adjusted for ambient temperature ($R * I_{OCPD}$). For example, $T_{off}$ may be determined using a lookup table in some embodiments, with the load center energy level ($I_{ema}$) and the adjusted load center current rating ($R * I_{OCPD}$) again used as the inputs to the lookup table. The values in such a lookup table may again be derived empirically from experimental or observed data in some embodiments, or the values may be derived mathematically using one or more of Equation (1) to (3) in conjunction with the trip curve for the particular circuit breaker involved. Table 3 below shows an example table that may be used as a lookup table for values of $T_{off}$. The relevant panel temperature decay time $T(t_{panel})$ may then be added to the values of $T_{cool}$ to arrive at the proper value for $T_{off}$.

**TABLE 3: $T_{cool}$ Lookup Table**

|  | $R * I_{OCPD}(1)$ | $R * I_{OCPD}(2)$ | ... | $R * I_{OCPD}(n)$ |
|---|---|---|---|---|
| $I_{ema}(1)$ | $T_{cool}(1, 1)$ | $T_{cool}(1, 2)$ | ... | $T_{cool}(1, n)$ |
| $I_{ema}(2)$ | $T_{cool}(2, 1)$ | $T_{cool}(2, 2)$ | ... | $T_{cool}(2, n)$ |
| ... | ... | ... | ... | ... |
| $I_{ema}(m)$ | $T_{cool}(m, 1)$ | $T_{cool}(m, 2)$ | ... | $T_{cool}(m, n)$ |

At block 1016, the energy management system 512 makes a determination whether the recovery timer ($T_{cnt\_off}$)

currently has a count of zero. If the determination is no, then the system 512 decrements the recovery timer ($T_{cnt\_off}$) from its current count at block 1018. The system 512 then waits a predefined number of seconds (N(sec)) at block 1008, and proceeds to obtain the next load center energy measurement at block 1010, as discussed previously. On the other hand, if the determination at block 1016 is yes, then the system 512 proceeds to connect the load that was identified above (L[n], *max(priority)),* for example, by issuing an instruction for that load to be connected. The system 512 thereafter updates the load list at block 1022 to reflect that the shedded load has now been connected (L[n] = ON State). A control or command signal is then sent from the system 512 to the branch breaker for the identified load appropriately configured (i.e., formatted) to cause it to connect that load, and the system 512 thereafter proceeds to block 1008 and continues as discussed above.

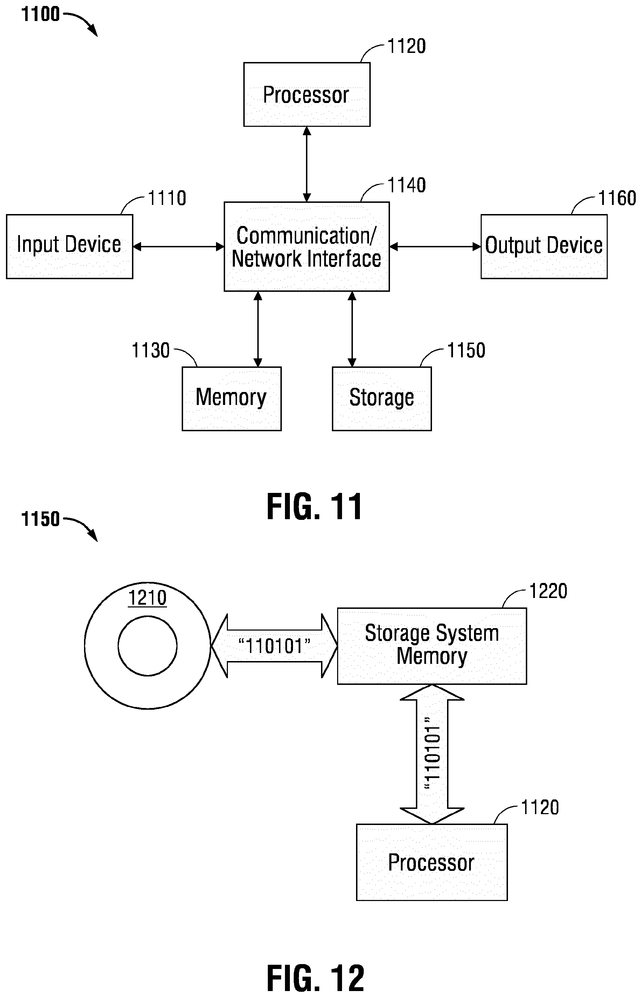

FIG. 11 illustrates an example system that may be used to implement various embodiments of the energy management system discussed in this disclosure. For example, various embodiments of the disclosure may be implemented as specialized software executing in an energy management system 1100 such as that shown in FIG. 11. The system 1100 may include a processor 1120 connected to one or more memory devices 1130, such as magnetic or solid sate memory, either embedded and discrete, or other memory devices for storing data. Memory 1130 is typically used for storing programs and data during operation of the system 1100. The system 1100 may also include a storage unit 1150 that provides additional storage capacity. Components of system 1100 may be coupled by a communication interface 1140, which may include one or more busses (e.g., between components that are integrated within the same machine) and/or a network interface 1140 (e.g., between components that reside on separate discrete machines). The communication/network interface 1140 enables communications (e.g., data, instructions) to be exchanged between system components of system 1100 and system components of other systems on the network.

System 1100 also includes one or more input devices 1110, for example, keys, buttons, microphone, touch screen, and one or more output devices 1160, for example, a display screen, LEDs, and the like. In addition, system 1100 may contain one or more interfaces (not shown) that connect system 1100 to a communication network (in addition or as an alternative to the interconnection mechanism 1140).

The storage unit 1150, shown in greater detail in FIG. 12, typically includes a computer readable and writeable nonvolatile recording medium 1210 in which signals are stored that define a program to be executed by the processor 1120 or information stored on or in the medium 1210 to be processed by the program to perform one or more functions associated with embodiments described herein. To this end, the processor 1120 may be any suitable processing unit, such as a microprocessor, microcontroller, ASIC, and the like, and the medium any suitable recording medium, such as a magnetic or solid-state memory. Typically, in operation, the processor 1120 causes data to be read from the nonvolatile recording medium 1210 into storage system memory 1220 that allows for faster access to the information by the processor than does the medium 1210. This storage system memory 1220 is typically a volatile, random access memory such as a dynamic random-access memory (DRAM) or static memory (SRAM). This storage system memory 1220 may be located in storage unit 1150, as shown, or in the system memory 1130. The processor 1120 generally manipulates the data within the memory system 1220 and then copies the data to the medium 1210 after processing is completed. A variety of mechanisms are known for managing data movement between the medium 1210 and the integrated circuit memory element 1220, and the disclosure is not limited thereto. The disclosure is not limited to a particular memory 1220, memory 1130 or storage unit 1150.

The system 1100 may include specially programmed, special-purpose hardware, for example, an application-specific integrated circuit (ASIC). Aspects of the disclosure may be implemented in software, hardware or firmware, or any combination thereof. Further, such methods, acts, systems, system elements and components thereof may be implemented as part of the system described above or as an independent component.

Although the system 1100 is shown by way of example as one type of system upon which various aspects of the disclosure may be practiced, it should be appreciated that aspects of the disclosure are not limited to being implemented on the system as shown in FIG. 11. Various aspects of the disclosure may be practiced on one or more devices having a different architecture or components from that shown in FIG. 11. Further, where functions or processes of embodiments of the disclosure are described herein (or in the claims) as being performed on a processor or controller, such description is intended to include systems that use more than one processor or controller to perform the functions.

In the preceding, reference is made to various embodiments. However, the scope of the present disclosure is not limited to the specific described embodiments. Instead, any combination of the described features and elements, whether related to different embodiments or not, is contemplated to implement and practice contemplated embodiments. Furthermore, although embodiments may achieve advantages over other possible solutions or over the prior art, whether or not a particular advantage is achieved by a given embodiment is not limiting of the scope of the present disclosure. Thus, the preceding aspects, features, embodiments and advantages are merely illustrative and are not considered elements or limitations of the appended claims except where explicitly recited in a claim(s).

It will be appreciated that the development of an actual commercial application incorporating aspects of the disclosed embodiments will require many implementation-specific decisions to achieve a commercial embodiment. Such implementation specific decisions may include, and likely are not limited to, compliance with system related, business related, government related and other constraints, which may vary by specific implementation, location and from time to time. While a developer's efforts might be considered complex and time consuming, such efforts would nevertheless be a routine undertaking for those of skill in this art having the benefit of this disclosure.

It should also be understood that the embodiments disclosed and taught herein are susceptible to numerous and various modifications and alternative forms. Thus, the use of a singular term, such as, but not limited to, "a" and the like, is not intended as limiting of the number of items. Similarly, any relational terms, such as, but not limited to, "top," "bottom," "left," "right," "upper," "lower," "down," "up," "side," and the like, used in the written description are for clarity in specific reference to the drawings and are not intended to limit the scope of the invention.

This disclosure is not limited in its application to the details of construction and the arrangement of components set forth in the following descriptions or illustrated by the drawings. The disclosure is capable of other embodiments and of being practiced or of being carried out in various ways. Also, the phraseology and terminology used herein is for the purpose of descriptions and should not be regarded as limiting. The use of "including," "comprising," "having," "containing," "involving," and variations herein, are meant to be open-ended, i.e., "including but not limited to."

The various embodiments disclosed herein may be implemented as a system, method or computer program product. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects may take the form of a computer program product embodied in one or more computer-readable medium(s) having computer-readable program code embodied thereon.

Any combination of one or more computer-readable medium(s) may be utilized. The computer-readable medium may be a non-transitory computer-readable medium. A non-transitory computer-readable medium may be, for example, but not limited to, an electronic, magnetic, optical, electromagnetic, infrared, or semiconductor system, apparatus, or system, or any suitable combination of the foregoing. More specific examples (a non-exhaustive list) of the non-transitory computer-readable medium can include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage system, a magnetic storage system, or any suitable combination of the foregoing. Program code embodied on a computer-readable medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages. Moreover, such computer program code can execute using a single computer system or by multiple computer systems communicating with one another (e.g., using a local area network (LAN), wide area network (WAN), the Internet, etc.). While various features in the preceding are described with reference to flowchart illustrations and/or block diagrams, a person of ordinary skill in the art will understand that each block of the flowchart illustrations and/or block diagrams, as well as combinations of blocks in the flowchart illustrations and/or block diagrams, can be implemented by computer logic (e.g., computer program instructions, hardware logic, a combination of the two, etc.). Generally, computer program instructions may be provided to a processor(s) of a general-purpose computer, special-purpose computer, or other programmable data processing apparatus. Moreover, the execution of such computer program instructions using the processor(s) produces a machine that can carry out a function(s) or act(s) specified in the flowchart and/or block diagram block or blocks.

One or more portions of the computer system may be distributed across one or more computer systems coupled to a communications network. For example, as discussed above, a computer system that determines available power capacity may be located remotely from a system manager. These computer systems also may be general-purpose computer systems. For example, various aspects of the disclosure may be distributed among one or more computer systems configured to provide a service (e.g., servers) to one or more client computers, or to perform an overall task as part of a distributed system. For example, various aspects of the disclosure may be performed on a client-server or multi-tier system that includes components distributed among one or more server systems that perform various functions according to various embodiments of the disclosure. These components may be executable, intermediate (e.g., IL) or interpreted (e.g., Java) code which communicate over a communication network (e.g., the Internet) using a communication protocol (e.g., TCP/IP). For example, one or more database servers may be used to store system data, such as expected power draw, that is used in designing layouts associated with embodiments of the present disclosure.

Various embodiments of the present disclosure may be programmed using an object-oriented programming language, such as SmallTalk, Java, C++, Ada, or C# (C-Sharp). Other object-oriented programming languages may also be used. Alternatively, functional, scripting, and/or logical programming languages may be used, such as BASIC, Fortran, Cobol, TCL, Lua, Python, Rust or basic C. Various aspects of the disclosure may be implemented in a non-programmed environment (e.g., analytics platforms, or documents created in HTML, XML or other format that, when viewed in a window of a browser program render aspects of a graphical-user interface (GUI) or perform other functions). Various aspects of the disclosure may be implemented as programmed or non-programmed elements, or any combination thereof.

The flowchart and block diagrams in the Figures illustrate the architecture, functionality and/or operation of possible implementations of various embodiments of the present disclosure. In this regard, each block in the flowchart or block diagrams may represent a module, segment or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Thus far, a number of features and advantages of embodiments of the present disclosure have been shown and described. Other possible features and advantages associated with the disclosed embodiments will be appreciated by one of ordinary skill in the art. It should also be understood that embodiments of the disclosure herein may be configured as a system, method, or combination thereof. Accordingly, embodiments of the present disclosure may be comprised of various means including hardware, software, firmware or any combination thereof.

While particular embodiments and applications of the present disclosure have been illustrated and described, it is to be understood that embodiments of the disclosure not limited to the precise construction and compositions disclosed herein and that various modifications, changes, and variations can be apparent from the foregoing descriptions without departing from the spirit and scope of the disclosure as defined in the appended claims.

## Claims

1. An energy management system for a load center, the system comprising:

   a processor; and
   a storage unit coupled to the processor, the storage unit storing computer-readable instructions thereon that, when executed by the processor, cause the processor to:

   obtain a load center energy level from an overcurrent protection device in the load center, the load center energy level indicative of an amount of current flowing through the overcurrent protection device;
   obtain a panel temperature within the load center corresponding to the load center energy level;
   determine whether the load center is operating in an overloaded state based on the panel temperature within the load center and the load center energy level; and
   adjust the load center energy level of the load center according to a temperature model of the load center and a thermal model of the overcurrent protection device to allow the load center to operate in the overloaded state without tripping the overcurrent protection device.

2. The system of claim 1, wherein the computer-readable instructions further cause the processor to adjust the load center energy level of the load center by:

   computing a thermal shedding time for the load center as a function of the load center energy level, a re-rating factor, and a current rating of the overcurrent protection device, wherein the re-rating factor is derived using the panel temperature;
   determining whether the load center is operating in the overloaded state for an amount of time equal to or greater than the thermal shedding time; and
   issuing, responsive to the load center operating in the overloaded state for an amount of time equal to or greater than the thermal shedding time, a control signal configured to cause a specified load to be shed from the load center.

3. The system of claim 2, wherein the computer-readable instructions cause the processor to compute the thermal shedding time for the load center in response to a determination that the load center energy level exceeds a thermal shedding threshold multiplied by the re-rating factor and the current rating of the overcurrent protection device.

4. The system of claim 1, wherein the computer-readable instructions cause the processor to adjust the load center energy level by immediately issuing a control signal configured to cause a specified load to be shed from the load center.

5. The system of claim 4, wherein the computer-readable instructions cause the processor to immediately issue the control signal configured to cause a specified load to be shed from the load center in response to the load center energy level exceeding a fast shedding threshold multiplied by a re-rating factor and a current rating of the overcurrent protection device.

6. The system of claim 1, wherein the computer-readable instructions cause the processor to adjust the load center energy level by:

computing a thermal recovery time for the load center as a function of the load center energy level, a re-rating factor, a current rating of the overcurrent protection device, and a time function based on the panel temperature within the load center;
determining whether a load has been shed from the load center for a time equal to the thermal recovery time; and
issuing, responsive to the load having been shed from the load center for an amount of time equal to the thermal recovery time, a control signal configured to cause the load to be connected to the load center.

7. The system of claim 6, wherein the computer-readable instructions cause the processor to compute the thermal recovery time in response to the load being identified as having been shed from the load center.

8. The system of claim 1, wherein the temperature model of the load center is implemented as one or more lookup tables, and wherein the computer-readable instructions cause the processor to retrieve model values for the temperature model from the one or more lookup tables.

9. A method of managing a load center, the method comprising:

obtaining a load center energy level from an overcurrent protection device in the load center, the load center energy level indicative of an amount of current flowing through the overcurrent protection device;
obtaining a panel temperature within the load center corresponding to the load center energy level;
determining whether the load center is operating in an overloaded state based on the panel temperature within the load center and the load center energy level; and
adjusting the load center energy level of the load center according to a temperature model of the load center and a thermal model of the overcurrent protection device to allow the load center to operate in the overloaded state without tripping the overcurrent protection device.

10. A load center, comprising:

a housing;
an overcurrent protection device installed within the housing; and
an energy management system installed within the housing and communicatively coupled to the overcurrent protection device, the energy management system configured to:

obtain a load center energy level from the overcurrent protection device, the load center energy level indicative of an amount of current flowing through an overcurrent protection device;
obtain a panel temperature within the housing corresponding to the load center energy level;
determine whether the load center is operating in an overloaded state based on the panel temperature within the housing and the load center energy level; and
adjust the load center energy level of the load center according to a temperature model of the load center and a thermal model of the overcurrent protection device to allow the load center to operate in the overloaded state without tripping the overcurrent protection device.

11. The load center of claim 10, wherein the energy management system adjusts the load center energy level of the load center by:

computing a thermal shedding time for the load center as a function of the load center energy level, a re-rating factor, and a current rating of the overcurrent protection device, wherein the re-rating factor is derived using the panel temperature;
determining whether the load center is operating in the overloaded state for an amount of time equal to or greater than the thermal shedding time; and
issuing, responsive to the load center operating in the overloaded state for an amount of time equal to or greater than the thermal shedding time, a control signal configured to cause a specified load to be shed from the load center,
wherein the energy management system in particular computes the thermal shedding time for the load center in response to a determination that the load center energy level exceeds a thermal shedding threshold multiplied by the re-rating factor and the current rating of the overcurrent protection device.

12. The load center of claim 10, wherein the energy management system adjusts the load center energy level by immediately issuing a control signal configured to cause a specified load to be shed from the load center,
wherein the energy management system in particular issues the control signal configured to cause a specified load to be shed from the load center in response to a determination that the load center energy level exceeds a fast shedding threshold multiplied by a re-rating factor and a current rating of the overcurrent protection device.

13. The load center of claim 10, wherein the energy management system adjusts the load center energy level by:

computing a thermal recovery time for the load center as a function of the load center energy level, a re-rating factor, and a current rating of the overcurrent protection device;
determining whether a load has been shed from the load center for a time equal to the thermal recovery time; and
issuing, responsive to the load having been shed from the load center for an amount of time equal to the thermal recovery time, a control signal configured to cause the load to be connected to the load center.

14. The load center of claim 13, wherein the energy management system computes the thermal recovery time in response to the load being identified as having been shed from the load center.

15. The load center of claim 10, wherein the temperature model of the load center is implemented as one or more lookup tables, and wherein the energy management system retrieves model values for the temperature model from the one or more lookup tables.

100

OCPD
Trip Curve

Thermal
Trip
Region
104

MAXIMUM SINGLE
POLE TRIP TIMES AT
25°C BASED ON
NEMA AB-2, 1980

102

108

110

112

Elapsed Time (Seconds)

Magnetic
Trip
Region
106

MAXIMUM CLEARING TIME
(AT 50 Hz)     (AT 60 Hz)

1 CYCLE
(60Hz)

1 CYCLE
(50Hz)

½ CYCLE
(60Hz)

½ CYCLE
(50Hz)

Multiples of Rated Current (Amps)

## FIG. 1

FIG. 2

FIG. 3

400 ⟍

OCPD
Trip Curve

**Thermal Trip Region 404**

MAXIMUM SINGLE POLE TRIP TIMES AT 25°C BASED ON NEMA AB-2, 1980

408b
408a
402

408c
408
410
412

**Magnetic Trip Region 406**

MAXIMUM CLEARING TIME
(AT 50 Hz)    (AT 60 Hz)

1 CYCLE (60Hz)
½ CYCLE (60Hz)

1 CYCLE (50Hz)
½ CYCLE (50Hz)

Elapsed Time (Seconds)

Multiples of Rated Current (Amps)

# FIG. 4

**500**

**FIG. 5**

FIG. 6

512

600 — Initialization

602 — Load Center Energy and Temperature Measurement (including current and panel temperature measurements)

604 — Filter and Conditioning

606 — OCPD Thermal Model

608 — Panel Temperature Model

610 — EMS State Machine

612 — Configuration Thresholds

614 — Device Control

Device Control Signals

700

```
                    ┌─────────────┐
                    │    Start    │
                    └──────┬──────┘
                           │                                          ┌── 704
                           ▼  ┌── 702                            ┌──────────┐
              ┌────────────────────────┐                        │Configuration│
              │      Set/Get Load      │◄──────────────────────►│ Parameters │
              │  Center Configuration  │                        └──────────┘
              └────────────────────────┘
   (D)───────────────────►│  ┌── 706
                           ▼
              ┌────────────────────────┐
              │ Obtain Load Center Energy│
              │     Measurements        │
              └────────────────────────┘
                           │  ┌── 708
                           ▼
              ┌────────────────────────┐
              │    Low Pass Filter      │
              │ Exponential Moving Average│
              └────────────────────────┘
```

Low Pass Filter

Exponential Moving Average
$I_{ema} = EMA(I_{panel})$

708

Obtain Panel Ambient
Temperature $T_{panel}$

710

Determine Temperature Change
and Obtain Re-rating Factor, $R$

712

(C)

722 — Recovery and Normal Operation ◄── No ── 714 — $I_{ema} > Thres_{norm\_r} * R * I_{OCPD}$

Yes

718 — Thermal Shedding Decision ◄── No ── 716 — $I_{ema} > Thres_{fast\_r} * R * I_{OCPD}$ ── Yes ──► 720 — Quick Shedding

(A)                                                                      (B)

# FIG. 7

*800*

**804**
Increment Overload Timer
$T_{cnt}++$ [sec]

**802**
Already in Thermal Shedding ?

Ⓐ Thermal Shedding Decision

Yes → (to 804)

No

**806**
Set/Reset Overload Timer
$T_{cnt}=0$

Ⓓ

**814**
Load Center Energy and Temperature Measurements

**808**
Compute Thermal Shedding Time
(Use OCPD Thermal Properties)
$T_{shed} = T_{therm}(I_{ema}, R^*I_{OCPD})$ [sec]

**812**
Wait N(sec)

No ←

**810**
$T_{cnt} \geq T_{shed}$

Yes

**816**
Continue in Thermal Shedding State

**818**
Identify Next Load to Shed Based on Load Priorities

**820**
Shed Load
$L[n]$, *min(priority)*

**822**
Update Load List
$L[n]$ = OFF State

**824**
Control Load

# FIG. 8

24

900

(B) <u>Quick Shedding</u>

902

Identify Next Load to Shed
Based on Load Priorities

904

Shed Load
$L$[n], *min(priority)*

906

Update Load List
$L$[n] = OFF State

908

Control Load

910

Go to Load Center Energy and
Temperature Measurements

(D)

# FIG. 9

**1000**

Ⓐ

Ⓒ $\underline{\text{Recovery and}}$
$\underline{\text{Normal Operation}}$

1002

Find All Shedded Loads

1004

Identify Next Load to Recover
Based on Load Priorities

1006

No ← $L[n] == \text{OFF State}$
?

Yes

1012

Compute Thermal Recovery Time

(Thermal Properties of OCPD)
$T_{off} = T_{cool}(I_{ema}, R * I_{OCPD})$ [sec]

1014

Set/Reset Recovery Timer
$T_{cnt\_off} = T_{off}$

1016

$T_{cnt\_off} == 0$ — Yes
?

No

1018

Decrement Recovery Timer
$T_{cnt\_off} --$

1020

Connect Load
$L[n], max(priority)$

1022

Update Load List
$L[n] = \text{ON State}$

1010

Load Center Energy
and Temperature
Measurements

1008

Wait N(sec)

## FIG. 10

1100

1120
Processor

1110
Input Device

1140
Communication/
Network Interface

1160
Output Device

1130
Memory

1150
Storage

# FIG. 11

1150

1210

"110101"

1220
Storage System
Memory

"110101"

1120
Processor

# FIG. 12

Europäisches
Patentamt

European
Patent Office

Office européen
des brevets

# EUROPEAN SEARCH REPORT

Application Number

EP 25 18 9448

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/396055 A1 (NAKANO HIROSHI [JP] ET AL) 7 December 2023 (2023-12-07) * paragraphs [0031] - [0100]; figures 1-9 * | 1,6-10, 13-15 | INV. H02H3/093 H02H6/00 H02J3/14 H02H7/26 |
| X | CZ 307 686 B6 (VS BANSKA TECHNICKA UNIVERZITA OSTRAVA [CZ]) 13 February 2019 (2019-02-13) * translation enclosed; Obr. 1-2 and Graf. 1-3; paragraphs [0010] - [0079] * | 1-7,9-14 | H02H3/033 ADD. H02H5/04 H02H3/00 |
| X | WO 2016/059853 A1 (SHARP KK [JP]) 21 April 2016 (2016-04-21) * translation enclosed; paragraphs [0021] - [0072]; claims 1-5; figures 1-14 * | 1,8-10, 15 | |
| A | EP 0 688 080 B1 (SCHNEIDER ELECTRIC IND SA [FR]) 15 September 1999 (1999-09-15) * translation enclosed; paragraph [0049]; claims 1-10; figures 1-6 * | 1-15 | TECHNICAL FIELDS SEARCHED (IPC) H02H H02J |
| A | US 2021/155179 A1 (LAVOIE CLAUDE [CA] ET AL) 27 May 2021 (2021-05-27) * paragraphs [0040] - [0055]; figures 3, 4B * | 1-15 | |

The present search report has been drawn up for all claims

| Place of search | Date of completion of the search | Examiner |
|---|---|---|
| Munich | 10 October 2025 | Gomes Guerreiro, G |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 9448

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2025

| Patent document cited in search report | | | Publication date | Patent family member(s) | | | Publication date |
|---|---|---|---|---|---|---|---|
| US 2023396055 | A1 | | 07-12-2023 | CN | 116569433 | A | 08-08-2023 |
| | | | | DE | 112021004810 | T5 | 27-07-2023 |
| | | | | JP | 7449853 | B2 | 14-03-2024 |
| | | | | JP | 2022103897 | A | 08-07-2022 |
| | | | | US | 2023396055 | A1 | 07-12-2023 |
| | | | | WO | 2022145095 | A1 | 07-07-2022 |
| CZ 307686 | B6 | | 13-02-2019 | NONE | | | |
| WO 2016059853 | A1 | | 21-04-2016 | JP | 6386579 | B2 | 05-09-2018 |
| | | | | JP | WO2016059853 | A1 | 18-05-2017 |
| | | | | WO | 2016059853 | A1 | 21-04-2016 |
| EP 0688080 | B1 | | 15-09-1999 | DE | 69512138 | T2 | 27-04-2000 |
| | | | | EP | 0688080 | A1 | 20-12-1995 |
| | | | | FR | 2721449 | A1 | 22-12-1995 |
| US 2021155179 | A1 | | 27-05-2021 | CA | 3100782 | A1 | 27-05-2021 |
| | | | | CN | 112861247 | A | 28-05-2021 |
| | | | | EP | 3828404 | A1 | 02-06-2021 |
| | | | | US | 2021155179 | A1 | 27-05-2021 |

EPO FORM P0459

For more details about this annex : see Official Journal of the European Patent Office, No. 12/82

**EP 4 686 024 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 78462824